# EUROPEAN PATENT APPLICATION

(11) **EP 0 816 208 A2**
(43) Date of publication of application: **07.01.1998**
(21) Application number: 97304559.4
(22) Date of filing: 26.06.1997
(51) Int. Cl.: B62D 12/00, B62D 53/02

(54) **A vehicle**

(30) Priority: 26.06.1996 GB 9613415
(71) Applicant: THWAITES LIMITED, Warwickshire CV32 7NQ (GB)
(72) Inventor: Harris, Stephen Roger, Harbury, Warwickshire CV33 9LZ (GB)
(74) Representative: Dempster, Benjamin John Naftel

(57) **Abstract**

The vehicle comprises front and rear wheel-carrying chassis units (12, 14) which are pivotally interconnected through a pivot arrangement (16). The pivot arrangement includes a first pivot (34) and a second pivot (42) vertically spaced and horizontally offset from the first pivot (34) in a direction transverse to a central longitudinal axis (40) of the vehicle. The pivot arrangement (34, 42) permits the chassis units (12, 14) to roll relative to each other, but the second pivot (42) inhibits horizontal articulation of the two chassis units (12, 14).

## Description

The invention relates to a vehicle and is particularly, but not exclusively, concerned with a vehicle suitable for use in quarries or earth moving applications.

For some years, we have manufactured dumpers or like vehicles comprising front and rear wheel-carrying chassis units which are interconnected through a pivot arrangement to enable the two chassis units to roll and steer relative to each other. The pivot arrangement comprises a first connecting member on one of the chassis units which is connected to a first pivot on the other chassis unit, and a second connecting member vertically spaced from the first connecting member and which is connected to both chassis units through respective second and third pivots. Whilst such an arrangement enables the two chassis units to roll and steer relative to each other, there are vehicle applications where horizontal articulation between the two chassis units to effect steering is undesirable. For example, where a vehicle is to be used for carrying heavy loads in quarry or earth moving applications, it can be better for the steering to be effected by turning the wheels relative to the chassis rather than by articulating the two chassis units. In that way, the centre of gravity of the vehicle remains close to a central longitudinal axis of the vehicle whereas the centre of gravity tends to move well to one side of that axis when the vehicle is steered by relative horizontal articulation between the front and rear chassis units. However, as the vehicle will invariably travel over very uneven ground in a typical quarry or earth moving application, it remains desirable not to use a single solid chassis but to have two chassis units which can roll relative to each other.

An object of the present invention is to provide an improved pivot arrangement in a vehicle comprising front and rear wheel-carrying chassis units which will permit the chassis units to roll relative to each other but which will inhibit horizontal articulation between them.

According to the invention there is provided a vehicle comprising front and rear wheel-carrying chassis units which are pivotally interconnected through a pivot arrangement, the pivot arrangement including first pivot means and second pivot means vertically spaced and horizontally offset from the first pivot means in a direction transverse to a central longitudinal axis of the vehicle, the pivot arrangement permitting the chassis units to roll relative to each other, the second pivot means inhibiting horizontal articulation of the two chassis units.

With such a pivot arrangement, the front and rear chassis units act after the manner of one piece chassis when moving over level ground so that the centre of gravity of the vehicle does not generally move away from the longitudinal axis during steering of the vehicle. However, the pivot arrangement still permits the front and rear chassis units to roll relative to each other to ensure continued ground contact between the wheels of the vehicle when travelling over uneven ground.

In the preferred embodiment, the central longitudinal axes passes through the first pivot means and preferably defines a roll axis. The first pivot means may comprise a substantially universal pivotal interconnection between the two chassis units.

The second pivot means may take the form of a link extending between the two chassis units, the ends of the link being pivotally interconnected to the respective chassis units.

Preferably, a further second pivot means is vertically spaced from the first pivot means and horizontally off set from the first pivot means in an opposite transverse direction.

Where the second pivot means comprises a link pivotally connected to the front and rear chassis units at its ends, vertical axes passing through the link pivots preferably lie respectively forwardly and rearwardly of a vertical axis passing through the first pivot means. The vertical axis of the first pivot means may be substantially midway between the vertical axes of the link pivots.

Where the further second pivot means is provided, it may also comprise a link having its ends pivotally interconnected to the respective front and rear chassis units and, in such a case, the links preferably lie equidistantly one each side of a vertical axis passing through the first pivot means.

The front chassis section may carry an engine and a cab and the rear chassis section may carry a load carrying skip.

The terms "vertical" and "horizontal" used herein refer to a condition where the vehicle is standing on level ground.

A vehicle in accordance with the invention will now be described by way of example with reference to the accompanying drawings in which:
Fig 1 is a schematic elevation of a vehicle in accordance with the invention,
Fig 2 is an elevation of a chassis of the vehicle shown in Fig 1,
Fig 3 is a plan view of the chassis shown in Fig 2 and
Fig 4 is a diagrammatic perspective view of part ofthe chassis illustrating rolling movement.

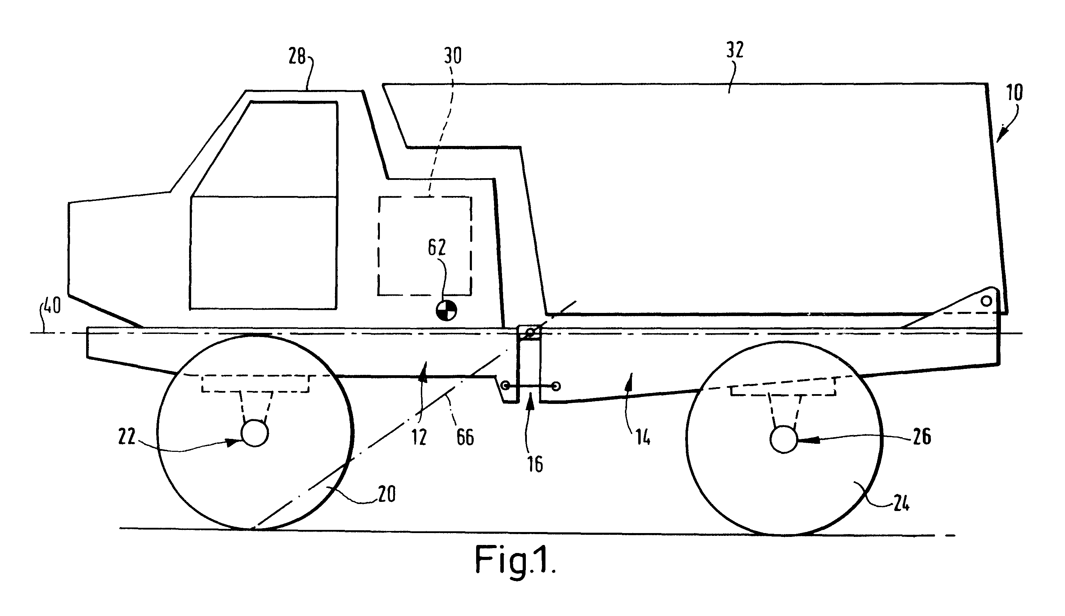

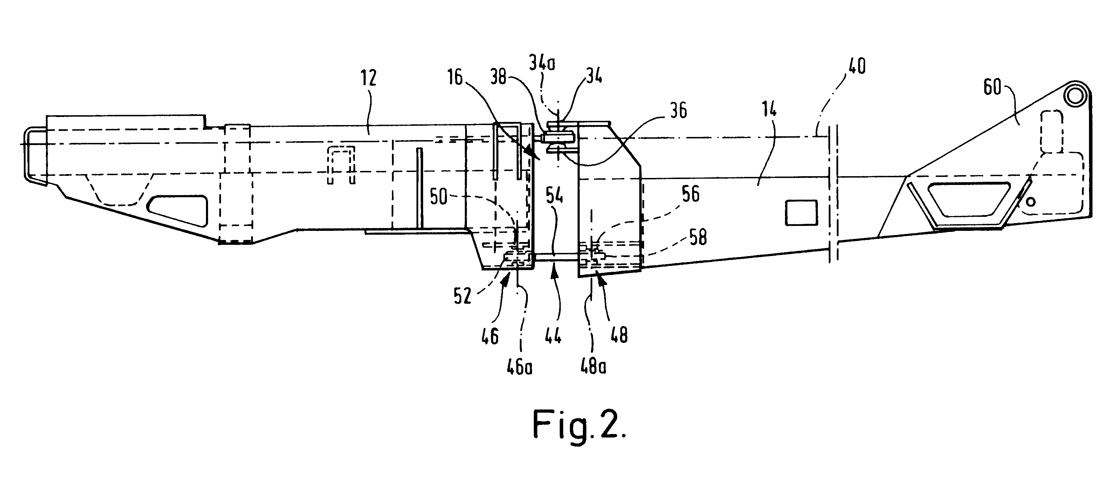

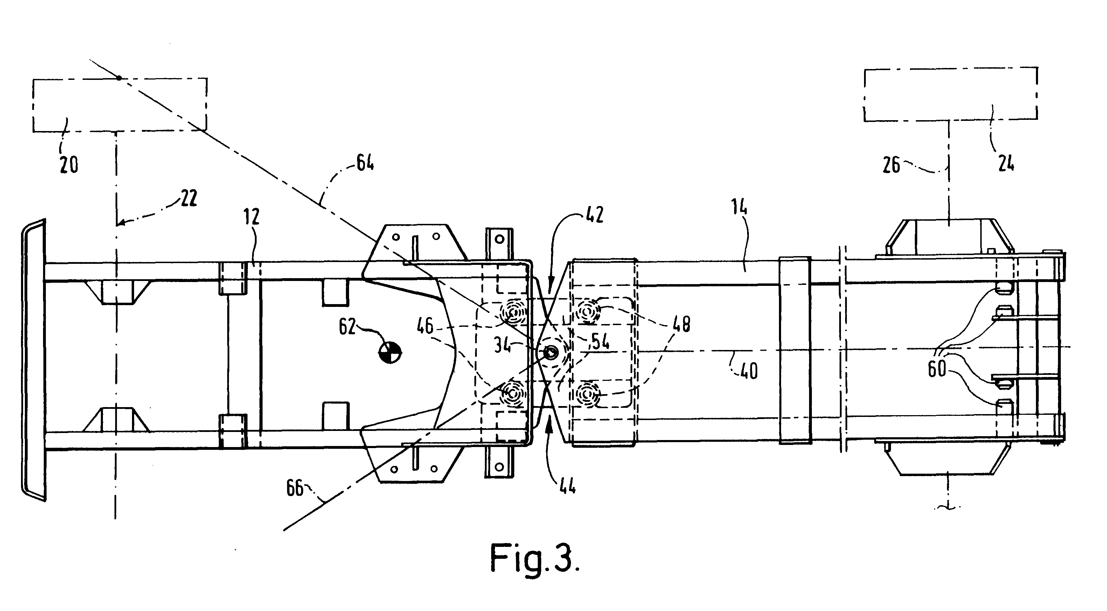

Looking at Fig 1, a vehicle 10 comprises front and rear chassis units 12, 14 respectively joined together by a pivot arrangement generally indicated at 16 and which is shown in detail in Figs 2 and 3. The pivotal arrangement 16 permits the front and rear chassis sections 12, 14 to roll relative to each other but prevents horizontal articulation of the front and rear chassis units. The front chassis unit 12 carries a first pair of wheels 20 mounted for driving and steering movement on a steer drive axle of known kind indicated generally at 22 and which will not be described in detail. The rear chassis unit 14 carries a pair of rear wheels 24 which may be mounted directly on the chassis unit 14 or carried by a steer drive axle 26 to permit driving and steering movement of the rear wheels 24.

The wheels 22 and, if desired, the wheels 24 are steered relative to their respective chassis units 12, 14.

The front chassis unit 12 carries a cab 28 and engine 30 and the rear chassis unit 14 carries a skip 32 which may be tipped rearwardly by means of a ram (not shown).

The pivot arrangement 16 will now be described in detail with reference to Figs 2 and 3.

The pivot arrangement 16 comprises an upper first pivot 34 in the form of a universal bearing of known kind. The bearing comprises a first part 36 mounted on the rear chassis section 14 and a second part 38 mounted on the front chassis section 12. The bearing 34 lies on a longitudinal centre line 40 about which the chassis units 12, 14 can roll relative to each other.

The pivot arrangement 16 also comprises two second pivots indicated generally at 42 and 44 which are arranged beneath the first pivot 34 and horizontally offset laterally therefrom as will be appreciated from Fig 3. The second pivot 42 comprises front and rear bearings 46, 48 substantially identical to the bearing 34. The front bearing 46 comprises a first part 50 on the front chassis unit 12 and a second part 52 at one end of a link 54. The rear bearing 48 comprises a first part 56 on the rear chassis unit 14 and a second part 58 at the opposite end of the link 54. It will be noted from Fig 2 that vertical axes 46a, 48a passing through the bearings 46, 48 lie respectively forwardly and rearwardly of a vertical axis 34a passing through the bearing 34.

The second pivot 44 is constructed in the same manner as the pivot 42 and corresponding parts carry corresponding reference numerals. It will be noted that the links 54 are parallel and are arranged equidistantly one each side of the longitudinal axis 40 of the vehicle.

In use, the cab and engine 28, 30 respectively are suitably mounted on the front chassis unit 12 and the skip 32 is mounted on trunnions 60 on the rear chassis unit 14. When the vehicle 10 is travelling along level ground, the presence of the links 54 and the positioning of the axes 46a, 48a offset from the axis 34a prevent the two chassis units 12, 14 articulating in a horizontal plane whereby the chassis units 12, 14 act effectively as a single rigid chassis. That arrangement is particularly advantageous as the centre of gravity of the vehicle indicated at 62 in Figs 1 and 3 will lie generally in an imaginary vertical plane containing the longitudinal centre line 40 of the vehicle. As will be appreciated, if the front and rear chassis units 12, 14 were permitted to articulate in a horizontal direction to enable the vehicle to be steered, the centre of gravity 62 would move substantially to one side of the centre line 40 during such movement.

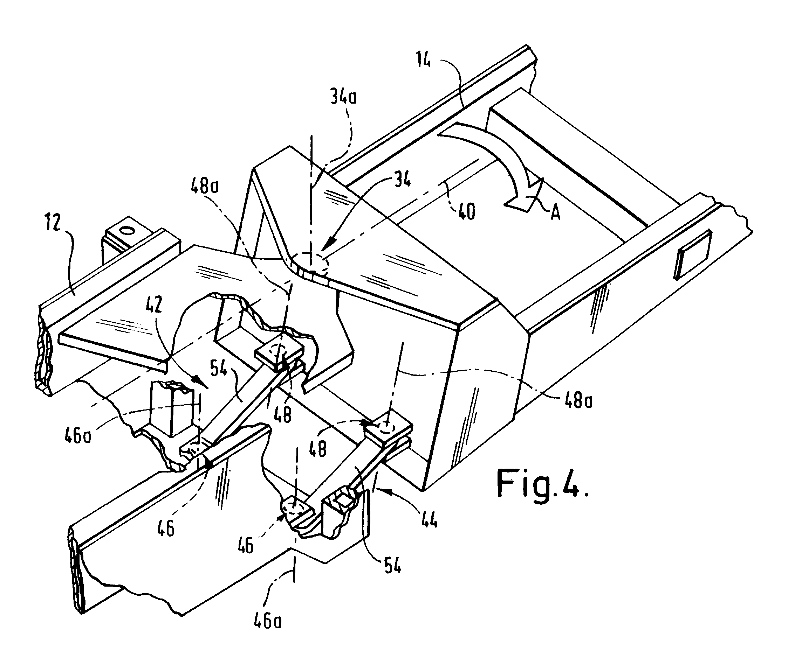

Although the arrangement of the links 54 prevent the chassis units 12, 14 from articulating horizontally, the chassis sections 12, 14 are permitted to roll relative to each other about the axis 40 as will be appreciated from Fig 4. If the rear chassis unit 14 is riding along level ground and one of the wheels 24 on the rear chassis unit 14 falls by encountering a depression, the rear chassis unit 14 will pivot about the axis 40 as shown by arrow A in Fig 4 and the bearings 48 will move towards one side relative to the bearings 46 on the front chassis unit 12 causing the two links 54 to move substantially after the manner of parallelogram arms. When the rear chassis unit 14 rolls in the direction shown in Fig 4, bearing 48 of the pivot 42 rises and the bearing 48 of the pivot 44 falls from the Fig 2 position taking the links 54 with them. Such movement is accommodated by the universal nature of the bearings 46, 48.

The spaced apart first and second pivots 34, 42 and 44 prevent articulation of the chassis units 12, 14 in a vertical plane.

In practice, it is desirable to place the first pivot 34 about which the chassis sections 12, 14 can roll relative to each other high on the vehicle chassis. In that way, an overturning moment of the vehicle during relative roll between the chassis units 12, 14 is minimised which is advantageous from the point of view of vehicle stability on uneven ground. Although the centre of gravity 62 may move to one side or the other of the axis 40 during relative rolling between the front and rear chassis units 12, 14 it will not normally move outside oftwo lines 64, 66 which extend between the outer edges of the front pair of wheels 20 and the bearing 34. The risk of overturning during roll is thereby minimised. Where the centre of gravity 62 is positioned over the rear chassis section 14, it will similarly lie within corresponding lines (not shown) interconnecting the bearing 34 and the outer edges of the rear wheels 24.

## Claims

1. A vehicle comprising front and rear wheel-carrying chassis units (12, 14) which are pivotally interconnected through a pivot arrangement (16), the pivot arrangement including a first pivot (34) and a second pivot (42) vertically spaced and horizontally offset from the first pivot (34) in a direction transverse to a central longitudinal axis (40) of the vehicle, the pivot arrangement (34, 42) permitting the chassis units (12, 14) to roll relative to each other, the second pivot (42) inhibiting horizontal articulation of the two chassis units (12, 14).

2. A vehicle according to Claim 1 in which the first pivot (34) is arranged on said longitudinal axis (40).

3. A vehicle according to Claim 1 or 2 in which the first pivot (34) comprises a substantially universal pivotal interconnection between the two chassis units (12, 14).

4. A vehicle according to Claim 1, 2 or 3 in which the second pivot (42) comprises a link (54) extending between the two chassis units (12, 14), the link (54) being pivotally interconnected to the respective chassis units (12, 14).

5. A vehicle according to Claim 4 in which vertical axes (46a, 48a) passing through pivots (46, 48) of the link (54) lie respectively forwardly and rearwardly of a vertical axis (34a) passing through the first pivot (34).

6. A vehicle according to preceding claim in which a further second pivot (44) is vertically spaced from the first pivot (34) and horizontally off set from the first pivot (34) in an opposite transverse direction.

7. A vehicle according to Claim 6 in which the further second pivot (44) comprise a link (54) pivotally interconnected to the respective front and rear chassis units (12, 14).

8. A vehicle according to Claim 7 in which the links lie equidistantly one each side of a vertical axis (34a) passing through the first pivot (34).

9. A vehicle according to any preceding claim in which the front chassis section (12) carries an engine (30) and a cab (28).

10. A vehicle according to a preceding claim in which the rear chassis section (14) carries a load carrying skip (32).
